# EUROPÄISCHE PATENTANMELDUNG

(11) **EP 1 011 254 A2**
(43) Veröffentlichungstag der Anmeldung: **21.06.2000**
(21) Anmeldenummer: 99125378.2
(22) Anmeldetag: 20.12.1999
(51) Int. Cl.: H04M 3/48

(54) **Verfahren und Telefon zum Wählen von Telefonnummern mittels Callback-/Callthrough-Provider**

(30) Priorität: 18.12.1998 DE 19858629
(71) Anmelder: ROBERT BOSCH GMBH, 70442 Stuttgart (DE)
(72) Erfinder: Hasemann, Jörg-Michael, 27339 Riede (DE)

(57) **Zusammenfassung**

Die Erfindung betrifft ein Verfahren zum Wählen von Telefonnummern unter Verwendung von Callback-/Callthrough-Providern, wobei der Zielnummer automatisch im Falle eines Callback-Providers der Lockruf-Rückruf-Mechanismus automatisch vorangestellt wird und im Falle des Callthrough-Providers automatisch die Nummer des Callthrough-Providers zusammen mit der PIN-Information der Zielnummer vorangestellt und gewählt wird. Ferner umfaßt das Verfahren den Abfrageschritt, ob automatisches Callback-/Callthroughwählen oder Standardwählen durchgeführt wird. Ferner kann die Auswahl der Gesprächsaufbaumethode automatisch erfolgen.

## Beschreibung

Die Erfindung betrifft ein Verfahren zum Wählen von Telefonnummern unter Verwendung von Callback-/Callthrough-Providern sowie ein Telefon, insbesondere ein Mobiltelefon, das ein derartiges Verfahren ausführt.

Auslandsgespräche und Mobiltelefongespräche sind tagsüber zumindest in Deutschland relativ teuer. Als günstige Alternative bieten sich sogenannte Callback- bzw. Callthrough-Provider an. Dabei handelt es sich um Telekommunikations-Serviceprovider, die Netzresourcen in großem Umfange aufkaufen bzw. anmieten, und über spezielle Telefonnummern und Ziffernfolgen, sogenannte PINs, diese Resourcen dem Endbenutzer zu einem günstigen Tarif zur Verfügung stellen.

Um mittels eines Callback-Providers zu telefonieren, wählt der Telefonbenutzer eine allein ihm zugeteilte Telefonnummer, läßt es dort einmal klingeln und legt auf. Dieser Vorgang wird als der sogenannte Lockruf bezeichnet. Sekunden später, in der Regel nach 3 - 12 Sekunden, wird der Telefonbenutzer automatisch zurückgerufen und bekommt ein Freizeichen, vorausgesetzt, er nimmt das Gespräch an. Er kann dann die Nummer des gewünschten Teilnehmers, die sogenannte Zielnummer, eingeben, die dann als DTMF-Tonfolge übertragen wird, und die Verbindung wird aufgebaut.

Nachteilig bei dem bekannten Callback-Verfahren ist die unbequeme Handhabung, indem manuell zuerst der Callback-Provider angewählt werden muß, und in der Zwischenphase das Telefon aufgelegt und wieder abgenommen werden muß, was für den Benutzer lästig ist.

Bei einem Callthrough-Provider wird zuerst die Nummer des Providers angewählt. Nachfolgend wird eine sogenannte PIN-Nummer eingegeben, der die eigentliche Zielnummer folgt. Diese PIN-Nummer dient zur Identifikation des Servicebenutzers und kann entfallen, wenn die Identifikation des Benutzers anderweilig, beispielsweise per CLIP, erfolgen kann. Unter CLIP (Calling Line Identification Presentation) versteht man die Übertragung der Rufnummer des anrufenden Geräts an den Angerufenen.

Abgerechnet werden die Kosten des Gesprächs in der Regel via Bankeinzug, Kreditkarte oder durch Vorauszahlung. Zur Zeit sind auf diese Weise in Deutschland tagsüber Mobilfunkgespräche, insbesondere Auslandsgespräche, möglich, die deutlich günstiger als bei dem normalen Netzbetreiber sind.

Zwar ist es prinzipiell möglich, Callback- bzw. Callthrough-Gespräche mit heutigen Telefonen zu initiieren und zu führen, jedoch ist dies insbesondere bei Mobiltelefonen ziemlich umständlich, da entweder im Falle von Callback-Gesprächen zunächst der Lockruf abgesetzt werden muß, dann auf den Rückruf gewartet werden und anschließend noch die Nummer des gewünschten Teilnehmers in Regel von Hand und nicht aus einem integrierten Telefonbuch eingegeben werden muß. Häufig ist dieses Vorgehen zudem durch eine notwendige Umschaltung/Einschaltung von DTMF-Tönen erschwert.

Im Falle von Callthrough-Gesprächen ergeben sich, insbesondere wenn die Eingabe einer PIN notwendig ist, häufig derart lange Ziffernfolgen, die speziell bei Mobiltelefonen in der Regel nicht in einem möglicherweise vorhandenen integrierten Telefonbuch gespeichert werden können, diese also bei jeden Telefonanruf von Hand eingegeben werden müssen. Selbst wenn es möglich wäre, die Ziffernfolgen im Telefonbuch des Mobiltelefons zu speichern, so würde sich die Anzahl der Telefonbucheinträge verdoppeln, da beispielsweise Gespräche außerhalb der Geschäftszeiten günstiger über den Service-Provider geführt werden können, und es für diesen Fall wünschenswert wäre, daß ein solcher Eintrag ohne die für den Callthrough-Serviceprovider vorangestellten Ziffernfolge im Telefonbuch vorliegt.

Der Erfindung liegt daher die Aufgabe zugrunde, ein benutzerfreundliches Verfahren zum Wählen von Telefonnummern unter Benutzung von Callback-/Callthrough-Providern zu schaffen, das in Telefonen, insbesondere Mobiltelefonen, integriert ist.

Die Aufgabe wird durch die Merkmale des Verfahrens nach Anspruch 1 und des Telefons nach Anspruch 12 gelöst. Bevorzugte Ausgestaltungen der Erfindung sind Gegenstand der Unteransprüche.

Erfindungsgemäß wird im Callback-Fall der Lockruf/Rückruf-Mechanismus automatisiert, d.h. das Mobiltelefon setzt automatisch den Lockruf ab, wartet auf den Rückruf, nimmt das Gespräch an, wählt den gewünschten Teilnehmer (Zielnummer) und macht sich, wenn die Verbindung hergestellt ist, beispielsweise durch ein Klingeln oder ein anderes akustisches oder optisches Signal bemerkbar.

Im Callthrough-Fall wird automatisch die Nummer des Callthrough-Serviceproviders zusammen mit der PIN-Information (sofern notwendig) der Nummer des gewünschten Teilnehmers vorangestellt und gewählt. Dabei kann die Nummer des Callthrough-Serviceproviders sowie die PIN-Information (sofern notwendig) entweder manuell eingegeben oder als Bestandteil des Telefonbuchs abgerufen werden.

In beiden Fällen ist es möglich, den Benutzer durch eine Abfrage vor jedem Gesprächsaufbau oder durch eine Markierung im Menü freizustellen, ob das gewünschte Gespräch via Callback-/Callthrough aufgebaut werden soll oder ob die standardmäßige Vermittlung verwendet wird. Möglich ist es auch, die Art des Gesprächsaufbaus durch ein entsprechendes Attribut im Telefonbucheintrag spezifisch zu machen oder die Auswahl des Gesprächsaufbaus zu automatisieren, dadurch das die in Abhängigkeit verschiedener Kriterien , beispielsweise Uhrzeit, Wochentag, Aufenthaltsort, etc., jeweils günstigste Methode gewählt wird.

Der wesentliche Vorteil des erfindungsgemäßen Verfahrens ist die benutzerfreundliche und transparente Integration von Callback- und Callthrough-Servicen in den Wählvorgang, d.h. die Gesprächsaufbauprozedur von Mobiltelefonen und das dadurch erleichterte, deutlich kostengünstigere Telefonieren im Vergleich mit Normalnetztarifen.

Die Anwendungsgebiete der Erfindung sind Telefone, insbesondere Mobiltelefone. Telefone verfügen über Verfahren zum Wählen von Telefonnummern, im allgemeinen als Gesprächsaufbau bezeichnet. Diese sind in der Regel so geartet, daß der Benutzer entweder die Telefonnummer des gewünschten Teilnehmers, d.h. die Zielnummer, direkt über eine Tastatur eingibt (Fall 1) oder insbesondere bei Mobiltelefon aus einem integrierten Telefonbuch den Namen des gewünschten Teilnehmers auswählt (Fall 2). Im ersten Fall wird die eingegebene Nummer gewählt, während im zweiten Fall die dem Namen zugeordnete Nummer gewählt wird.

Erfindungsgemäß wird der Wählvorgang erweitert, um Callback- bzw. Callthrough-Services zu nutzen.

Für den Callbackvorgang wird der Wählvorgang wie folgt erweitert:
(a) Das Telefon setzt zunächst einen Lockruf an den Callback-Serviceprovider ab. Hierzu wird die persönliche Nummer, die der Telefonbesitzer vom Callback-Provider bekommen hat, angewählt. Das Telefon läßt es dann einmal klingeln und bricht den Gesprächsaufbau ab.
(b) Optional wird an dieser Stelle der Benutzer darauf hingewiesen, daß ein Gesprächsaufbau via Callback versucht wird.
(c) Das Telefon wartet dann eine vorbestimmte Zeit, beispielsweise maximal 15 Sekunden, auf den Rückruf des Callback-Providers, wobei das Klingelsignal für diesen Zeitraum unterdrückt wird. Wenn der Anruf eingeht, nimmt das Telefon den Anruf stillschweigend an und überträgt die Zielnummer als DTMF-Töne an den Callback-Provider. Dieser versucht dann, eine Verbindung zur Zielnummer herzustellen.
(d) Wenn dies gelingt, wird der Mobiltelefonbesitzer beispielsweise durch ein Klingeln von der erfolgreichen Verbindung zur Zielnummer in Kenntnis gesetzt.
(e) Bei Fehlerfällen wird der Benutzer von der erfolglosen Verbindung benachrichtigt.

Für den Callthrough-Fall wird der Wählvorgang wie folgt erweitert:
(a) Der Zielnummer wird die Nummer des Callthrough-Providers sowie der persönliche PIN vorangestellt.
(b) Die sich ergebende Ziffernfolge wird dann gewählt.

Für beide Verfahren besteht die Möglichkeit, beispielsweise im Menübaum oder durch besondere Codefolgen, diese zu parametrisieren. Mit anderen Worten, die Telefonnummer und gegebenenfalls den PIN-Code für den Callback- bzw. Callthrough-Provider einzugeben und den Gesprächsaufbau via Callback/Callthrough zu aktivieren bzw. deaktivieren.

Ferner kann die Art des Gesprächsaufbaus (Standard bzw. Callback/Callthrough) als Attribut zum Telefonbucheintrag festgelegt werden.

In einer besonderen Ausführungsform wird der Benutzer nach der Eingabe der Telefonnummer bzw. Auswahl des Teilnehmers aus dem Telefonbuch vor dem eigentlichen Gesprächsaufbauversuch gefragt, nach welcher Art der Gesprächsaufbau versucht werden soll, d.h. Standard bzw. Callback/Callthrough.

In einer weiteren bevorzugten Ausführungsform geschieht die Auswahl der Gesprächsaufbaumethode automatisch, wobei bestimmte Kriterien wie beispielsweise Uhrzeit, Wochentag, Aufenthaltsort etc. verwendet werden, um das günstigste Verfahren zum Aufbau des Gesprächs zu bestimmen.

## Patentansprüche

1. Verfahren zum Wählen von Telefonnummern unter Verwendung von Callback-/Callthrough-Providern,
**dadurch gekennzeichnet,** daß
der Zielnummer automatisch im Falle eines Callback-Providers der Lockruf-Rückruf-Mechanismus automatisch vorangestellt wird und im Falle des Callthrough-Providers automatisch die Nummer des Callthrough-Providers der Zielnummer vorangestellt und gewählt wird.

2. Verfahren nach Anspruch 1, **dadurch gekennzeichnet,** daß das Verfahren den Abtrageschritt umfaßt, ob automatisches Callback-/Callthroughwählen oder Standardwählen durchgeführt wird.

3. Verfahren nach einem der Ansprüche 1 bis 2, **dadurch gekennzeichnet,** daß das Wählverfahren für einen Callbackanruf die folgenden Schritte aufweist:
(a) Absetzen eines Lockrufs an dem Callback-Serviceprovider durch Anwählen der persönlichen Callbacknummer;
(b) Absetzen eines Klingelzeichens und Abbrechen des Gesprächsaufbauversuchs;
(c) Warten auf den Rückruf des Callbackproviders für ein vorbestimmtes Zeitintervall, wobei das Klingelsignal für dieses Intervall unterdrückt ist;
(d) Falls der Rückruf des Callback-Providers in den Zeitintervall eingeht, Annehmen des Anrufs und Übertragen der Zielnummer an den Callback-Provider;
(e) Falls die Verbindung zur Zielnummer hergestellt ist, Aufnehmen eines normalen Telefongesprächs durch den Benutzer.

4. Verfahren nach Anspruch 3, **dadurch gekennzeichnet,** daß der Benutzer auf den Versuch des Gesprächsaufbaus via Callback hingewiesen wird.

5. Verfahren nach einem der Ansprüche 3 oder 4, **dadurch gekennzeichnet,** daß der Benutzer auf die Verbindung zur Zielnummer optisch oder akustisch hingewiesen wird.

6. Verfahren nach einem der Ansprüche 3 bis 5, **dadurch gekennzeichnet,** daß das Verfahren einen erfolglosen Verbindungsaufbau nach außen signalisiert.

7. Verfahren nach einem der Ansprüche 1 bis 2, **dadurch gekennzeichnet,** daß das Verfahren im Falle des Callthrough-Providers die folgenden Schritte umfaßt: (a) Voranstellen der Nummer des Callthrough-Providers vor die Zielnummer, und (b) Wählen der sich ergebenden Ziffernfolge.

8. Verfahren nach Anspruch 7, **dadurch gekennzeichnet,** daß im Schritt a zusätzlich die PIN-Information und/oder weitere als Ziffernfolge darstellbare Information zur Identifikation der Zielnummer vorangestellt wird.

9. Verfahren nach einem der vorangegangenen Ansprüche, **dadurch gekennzeichnet,** daß das Verfahren den Schritt des Aktivierens bzw. Deaktivierens des Gesprächsaufbaus via Callback-/Callthrough umfaßt.

10. Verfahren nach einem der vorangegangenen Ansprüche, **dadurch gekennzeichnet,** daß die Art des Gesprächsaufbaus, nämlich Standard- bzw. Callback-/Callthrough, als Attribut zum Telefonbucheintrag festgelegt ist.

11. Verfahren nach einem der vorangegangenen Ansprüche, **dadurch gekennzeichnet,** daß die Auswahl des Gesprächswahlverfahrens automatisch in Abhängigkeit vorbestimmter Kriterien erfolgt.

12. Verfahren nach Anspruch 11, **dadurch gekennzeichnet,** daß als Kriterien Uhrzeit und/oder Wochentag und/oder Aufenthaltsort Und/oder Zielwahlnummer verwendet werden.

13. Telefon, insbesondere Mobiltelefon, zum Ausführen des Verfahrens nach einem der vorangegangenen Ansprüche.

14. Telefon nach Anspruch 11, **dadurch gekennzeichnet,** daß die beiden Verfahren im Telefon parametrisiert sind.
